## Europäisches Patentamt

(19) **European Patent Office**

**Office européen des brevets**

(11) Publication number: **0 109 137**
**B1**

(12) EUROPEAN PATENT SPECIFICATION

(45) Date of publication of patent specification: **10.10.90**

(51) Int. Cl.⁵: **G 06 F 7/52, G 06 F 7/50**

(21) Application number: **83303303.8**

(22) Date of filing: **08.06.83**

(54) Partial product accumulation in high performance multipliers.

(30) Priority: **13.10.82 US 434298**

(43) Date of publication of application:
**23.05.84 Bulletin 84/21**

(45) Publication of the grant of the patent:
**10.10.90 Bulletin 90/41**

(84) Designated Contracting States:
**DE FR GB**

(56) References cited:
**US-A-3 700 875**

**ELECTRONICS LETTERS, vol. 7, no. 25, 16th
December 1971, pages 747-749, Hitchin, Herts,
GB; C.R. EDWARDS: "Floating-point cellular-
logic multiplier with variable dynamic range"**

(73) Proprietor: **Hewlett-Packard Company
Mail Stop 20 B-O 3000 Hanover Street
Palo Alto California 94304 (US)**

(72) Inventor: **Ware, Frederick A.
13961 Fremont Pines Lane
Los Altos Hills California 94022 (US)**

(74) Representative: **Patentanwälte Kohler -
Schwindling - Späth
Hohentwielstrasse 41
D-7000 Stuttgart 1 (DE)**

Courier Press, Leamington Spa, England.

**Description**

The present invention relates to a binary multiplier according to the precharacterizing part of Claim 1.

The present invention is concerned with partial product accumulation in high performance multipliers.

The multiplication of two N-bit operands is a fundamental operation in general purpose computer processors. To perform a longhand multiplication the first operand A is successively multiplied by each bit of the second operand B to create a partial product. The partial product is then shifted to assign the appropriate weight based on the weight of the corresponding digit of the second operand B. Finally, the shifted partial products are added together, i.e., accumulated, to form the final product D.

Several techniques have been devised to speed up and/or simplify the longhand multiplication described above. Usually, as explained by A. Booth, in "A Signed Binary Multiplication Technique", Quarterly Journal of Mechanics and Applied Mathematics, Vol. IV, pt. 2, pp. 236—240 (1951), an encoding scheme is performed on the bits of the B operand by means of a signed-digit-carry set (SDC) of, for example, +2, +1, 0, −1, and −2, to reduce the number of partial products to be accumulated by one-half. The accumulation is then performed in a ripple fashion through the use of full adders arranged in a carry save format. Each partial product bit still requires one full adder.

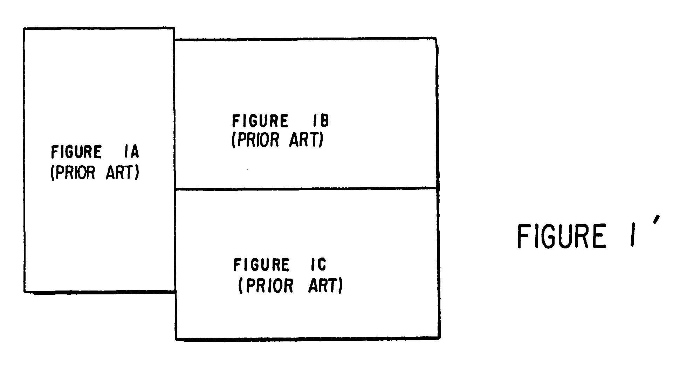

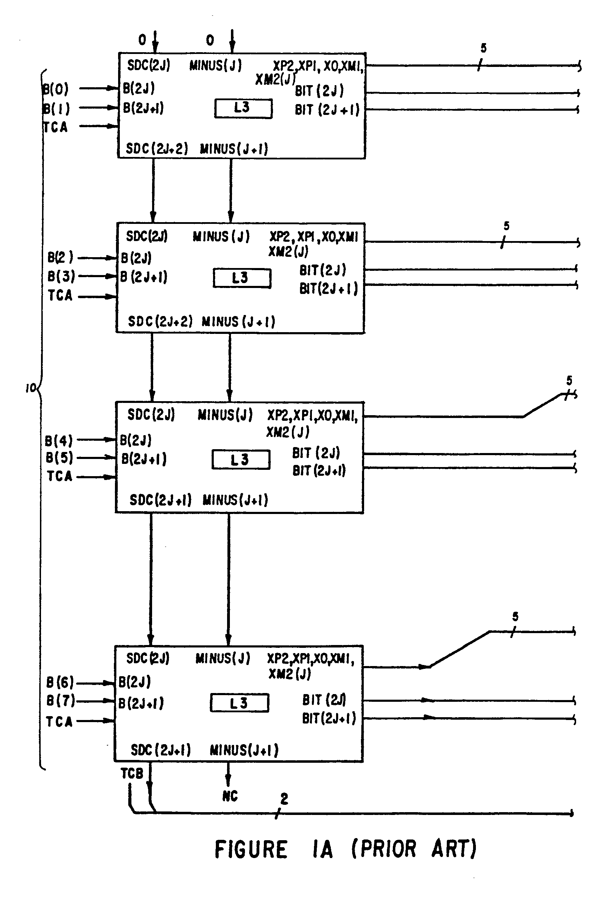

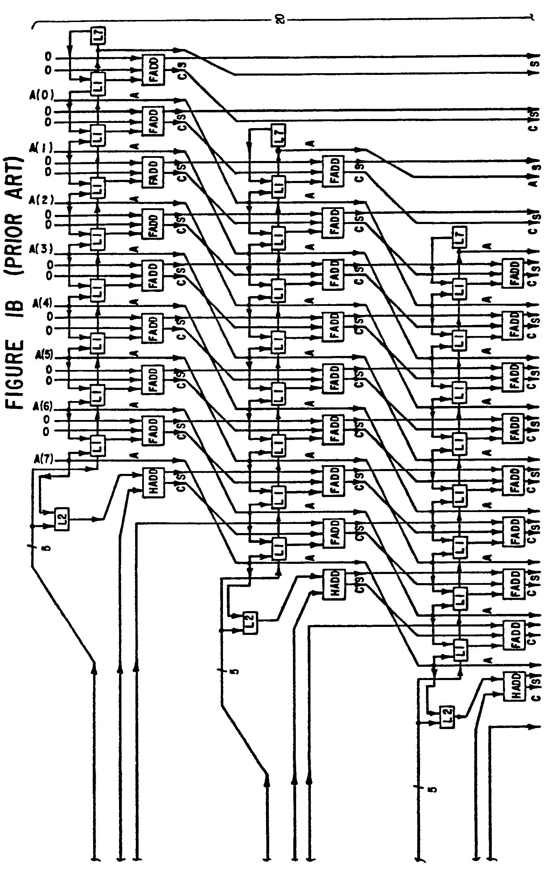

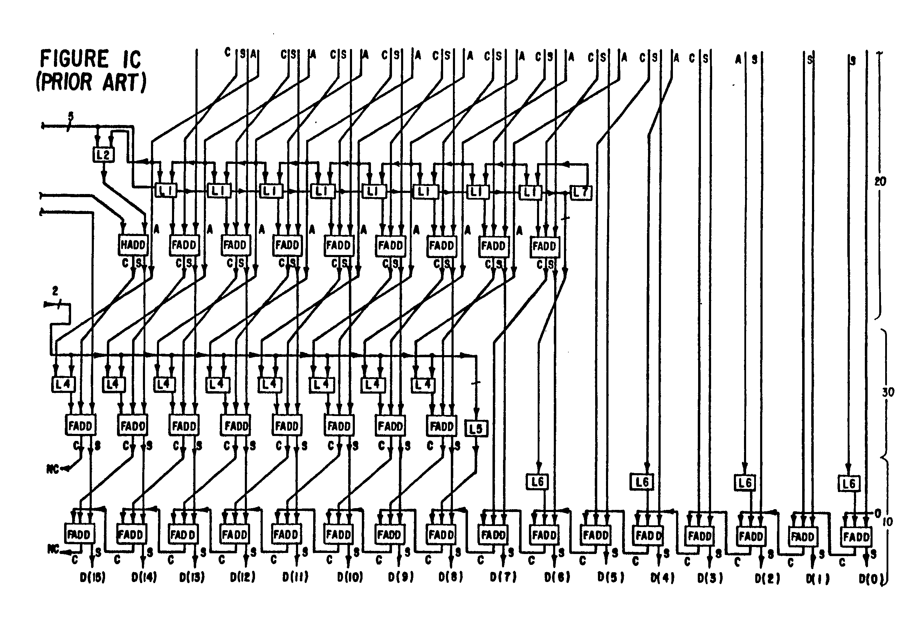

A complete 8×8 encoded binary multiplier is shown in Figure 1 of the accompanying drawings with the related Boolean equations in Table 1. Figure 1 consists of four sections: encoder logic 10, ripple accumulator 10, negative B operand correction 30, and a carry propagate adder 40.

TABLE 1

| | |
|---|---|
| L1 LOGIC | |
| L1(K.J) | $=[XP2(J) *A(K-1)]+[XP1(J) *A(K)]$ |
| | $+[XM1(J) *\overline{A}(K)]+ [XM2(J) *A(K-1)]$ |
| | |
| L2 LOGIC | |
| L2(2J) | $=[XP2(J) *A(7)]+(XM2(J) *A(7)]$ |
| | |
| L3 LOGIC | |
| NEGA | $=TCA *A(7)$ |
| P | $=[XM2(J) *\overline{NEGA}]+[XP2(J) *NEGA]$ |
| Q | $=[XM1(J) *\overline{NEGA}]+[XP1(J) *NEGA]$ |
| BIT(2J+1) | $=[MINUS(J) XOR P]+[\overline{MINUS(J)} *Q]$ |
| BIT(2J) | $=MINUS(J) XOR Q$ |
| MINUS(J+1) | $=MINUS(J)+P+Q$ |
| | |
| L4,L5,L6,L7 LOGIC | |
| NEGB | $=TCB *B7$ |
| L4(K) | $=[NEGB XOR SDC(8)] *[NEGB XOR A(K)]$ |
| L5 | $=NEGB *\overline{SDC(8)}$ |
| L6(J) | $=XM1(J)+XM2(J)$ |
| L7(J) | $=A(-1)=0$ |

The operands are A(0—7) and B(0—7) and the product is D(0—15). HADD and FADD are conventional half adders and full adders respectively with carry (C) and sum (S) outputs.

The inputs TCA and TCB indicate whether the A and B operands are two's complement (=1) or unsigned (=0). The symbols XP2, XP1, X0, XM1, and XM2 are used for the X(+2), X(+1), X(0), X(−1), and X(−2) encoded digits for clarity. "*" is the Boolean "AND", "+" is the Boolean "OR", and "XOR" is the Boolean "Exclusive-OR".

In Table 1, the logic block L1 consists of logic to select X(+2), X(+1), X(0), X(−1) or X(−2) multiples of the A operand. The multiples of A are generated in the array by simple shifting, complementing, or masking operations. The block L2 generates the lost bit that results from the single shift used to generate an X(+2) or X(−2) multiple.

TABLE 2

| B(2J+1) | B(2J) | SDC(2J) | Multiplier | SDC(2J+2) |
|---|---|---|---|---|
| 0 | 0 | 0 | X0 | 0 |
| 0 | 0 | 1 | XP1 | 0 |
| 0 | 1 | 0 | XP1 | 0 |
| 0 | 1 | 1 | XP2 | 0 |
| 1 | 0 | 0 | XM2 | 1 |
| 1 | 0 | 1 | XM1 | 1 |
| 1 | 1 | 0 | XM1 | 1 |
| 1 | 1 | 1 | X0 | 1 |

The logic block L3 incorporates the signed digit encoding set of Table 2 as proposed by Booth. The block L3 also performs an effective sign extension of each partial product to 16 bits. The signal Minus(J) indicates that at least one previous bit pair generated a negative partial product. This signal is combined with the signed digit multiplier of a bit pair to generate bit (2J) and bit (2J+1). These two signals are the effective sign extension for each partial product fully merged with the sign extensions of all previously generated partial products. The logic blocks L4 and L5 perform a correction for a negative B operand and for a signed digit carry out of the last multiplier bit pair. The blocks L6 and L7 perform a two's complement operation on the A operand for X(−1) and X(−2) signed digits.

The advantage of this ripple adder technique is that it is usually convenient to lay out the required circuitry in monolithic single chip form. However, this technique is generally quite slow because the partial product accumulation takes place in ripple fashion, and the worst case delay path must pass through all of the rows of full adders.

For example, in the case of the 8×8 multiplier with encoding as shown in Figure 1 which will have four 8-bit partial products, the worst case delay will be equivalent to four full adder delays. Without encoding, the worst case delay would be eight full adder delays. In the case of a 64×64 multiplier with encoding, the worst case delay would be thirty-two, and without encoding the maximum delay would be sixty-four full adder delays.

Accordingly, it is the object of the invention to provide a binary multiplier which achieves multiplication of a first operand and a second operand and can be expanded to any desired precision.

The object is solved by a binary multiplier of a first operand (A) and a second operand (B), each operand having N bits, including

an accumulating circuit and

a carry propagate adder,

said accumulating circuit being characterized in that

a) it includes a matrix array and an end column, said matrix array being composed of N/2 partial product rows and N columns of cells, each row being coupled to one pair of B-operand bits, each column being coupled to one bit of the A-operand, the rows of said combination of said matrix array and said end column being divided into blocks, so that the number of rows included in each block forms an arithmetic progression following the progression of the block number and matches the number of partial products required;

b) it only requires 8 different cell types whereby the accumulation of the blocks occurs in ripple fashion, but the ripple accumulation of the blocks occurs in parallel;

c) each slice of each block in the matrix array is implemented as one cell of first type, followed by one cell of second type, followed by one or more cells of third type, and finished by one cell of fourth type;

d) the slice of each block in the end column is implemented by one cell of fifth type, followed by one cell of sixth type, followed by one or more cells of seventh type, and finished by one cell of eighth type;

e) the ripple accumulation of the blocks is accomplished by global ripple terms $G_a$ and $G_b$;

f) each block performs a local ripple accumulation of its partial product terms labelled as $LC_a$ and $LC_b$;

g) a first block is arranged as

a first row of first type cells coupled to a digit of both said first and second operands for producing first local ripple terms, said first row being terminated by a cell of the fifth type of said end column, said fifth type cell being coupled to said B-operand for producing a first partial product signal.

a second row of second type cells coupled to a digit of both said first and second operands and to said first local ripple terms for producing second local ripple terms, said second row being terminated by a sixth type cell of said end column, said sixth type cell being coupled to said B-operand for producing a second partial product signal.

at least one row of third type cells, each row of third type cells being coupled to a digit of both said first and second operands, the first of said rows of third type cells being coupled to said second local ripple term for producing a first set of third local ripple terms, and subsequent ones of said rows of third type cells being coupled to the local ripple terms of the next following row of third type cells for producing subsequent sets of third local ripple terms, each of said rows of third type cells being terminated by a seventh type cell of said end column, said seventh type cell being coupled to the B-operand for producing a third partial product signal, and

a fourth row of fourth type cells coupled to a digit of both said first and second operands and to the last set of third local ripple terms for producing first global ripple terms, said fourth row of fourth type cells being terminated by an eighth type cell of said end column, said eighth type cell being coupled to the said B-operand for producing a fourth partial product signal; and a second block is arranged as

a fifth row of first type cells coupled to a digit of both said first and second operands and to the first global ripple terms of the first block for producing fifth local ripple terms, said fifth row being terminated by a fifth type cell of said end column, said fifth type cell being coupled to said B-operand for producing a fifth partial product signal,

a sixth row of second type cells coupled to a digit of both the first and the second operands and to said fifth local ripple terms for producing sixth local ripple terms, said sixth row being terminated by a sixth type cell of the end column, the sixth type cell being coupled to said B-operand for producing a sixth partial product signal,

at least one seventh row of third type cells, each seventh row being coupled to a digit of both said first and second operands, the first of said seventh rows being coupled to said sixth local ripple terms for producing a first set of seventh local ripple terms, and

subsequent ones of said seventh rows being coupled to the local ripple terms of the next following row of third type cells for producing subsequent sets of third local ripple terms, each of said seventh rows being terminated by a seventh type cell of the end column, the seventh type cell being coupled to the B-operand for producing a seventh partial product signal, and

an eighth row of fourth type cells coupled to a digit of both said first and second operands and to the last set of seventh local ripple terms for producing second global ripple terms, said eighth row of fourth type cells being terminated by an eighth type cell of the end column, the eighth type cell being coupled to the B-operand for producing an eighth partial product signal;

h) The partial product signals which are output from the respective cells of the end column are passed to the carry propagate adder, which produces the final multiplier product bits.

The claims 2 to 4 characterize advantageous developments thereof.

Thus, the present technique can be used for the accumulation of partial product terms in a high precision, high performance multiplier. The method is easily expandable to any desired precision. It is especially suited for utilization in a monolithic VLSI multiplier because of its high speed, low complexity, and straightforward mask design.

Generally, the present technique will be implemented in a multiplier which employs some form of encoding, as described earlier, since encoding can reduce the size of the accumulator by one-half, while the encoding itself usually requires only simple logic gates or multiplexors. However, the disclosed technique is a general method of accumulation and will function in a system which does not utilize encoding at all.

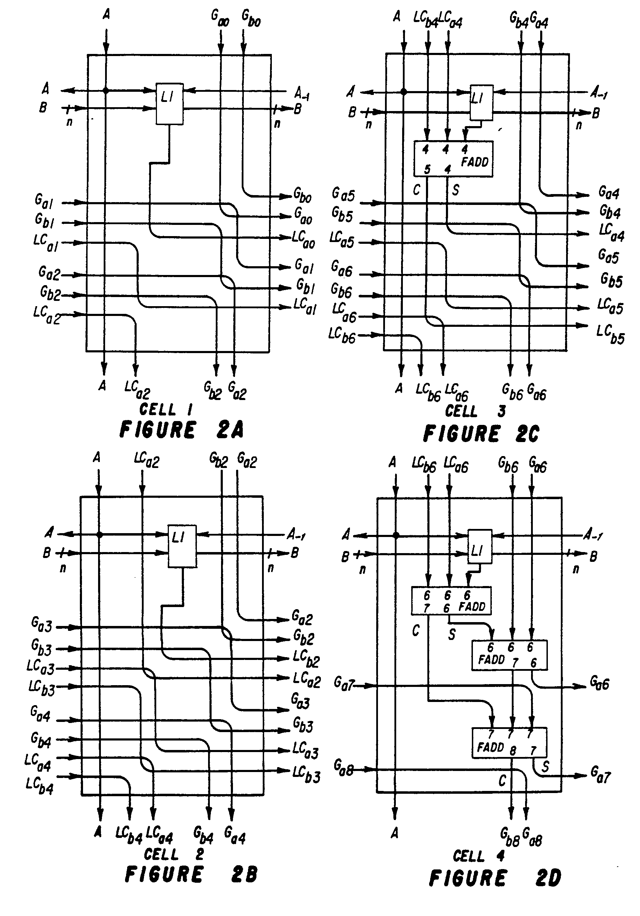

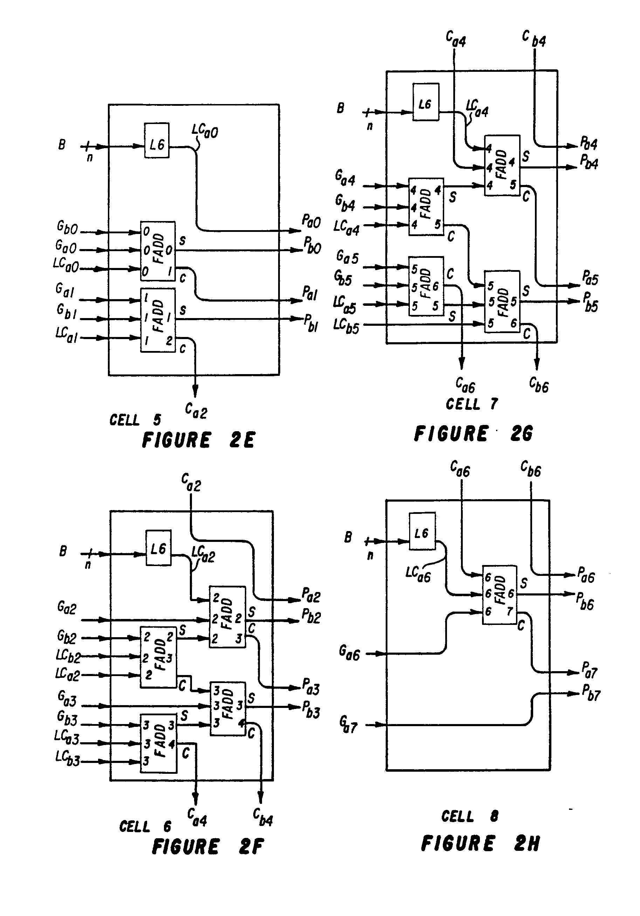

There now follows a detailed description which is to be read with reference to Figures 2 to 4 of the accompanying drawings of a circuit according to the present invention; it is to be clearly understood that the circuit has been selected for description to illustrate the invention by way of example and not by way of limitation.

In the accompanying drawings:

Figures 2A—2H show the set of cells required to implement the accumulation circuit of the present invention;

Figure 3 shows the organization of the cells of Figures 2A—2H into blocks to form a 64×64 bit accumulator with encoded B inputs; and

Figure 4 shows a modified version of the cell of Figure 2D to attain the minimum circuit delay.

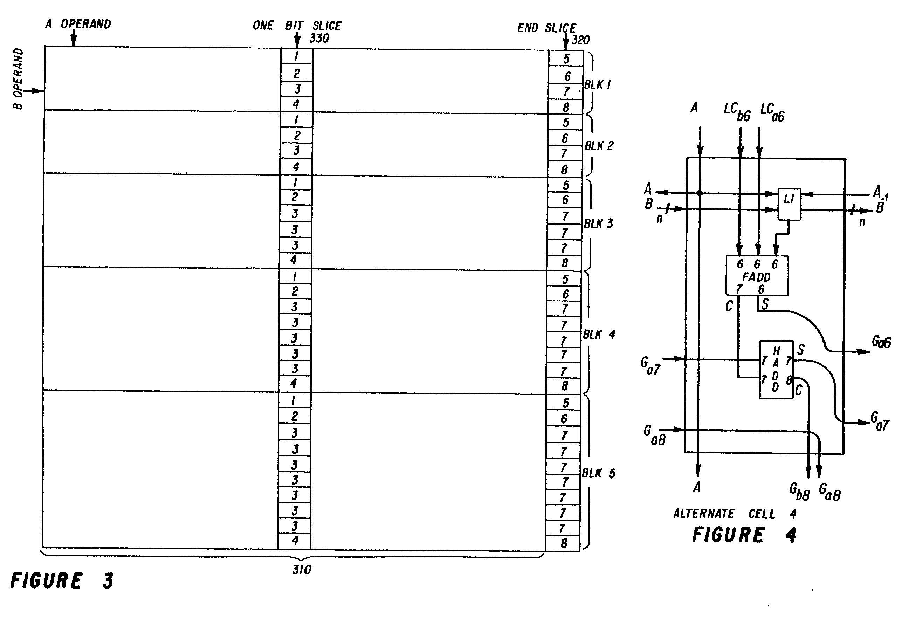

Figures 2A—2H show the complete set of cells necessary to implement the present digital accumulator. Shown are cells 1—8, respectively, which are organized, for example, as shown in Figure 3 to form a 64×64 bit memory array which can replace the ripple accumulator array 20 of the type shown in Figure 1. Cells 1—4 are used in the main array 310 of Figure 3. Each cell is one bit by one bit in area, thus requiring a main array 310 of 64×32 cells in the example shown in Figure 3 where encoding is assumed. The logic elements surrounding the main array 310 (encoder logic 10, negative operand correction 30, and the carry propagate adder 40 shown in Figure 1) are unchanged except for a single column 320 of end cells 5—8 which are also one bit in area as shown in Figures 2E—2H respectively, on the right side of the array 310. The logic element L1 used in the cells 1—4 and the logic element L6 used in the cells 5—8 are the same elements as are used in the prior art as illustrated in Table 1. The full adders FADD are also of convention design as used in the prior art.

As shown in Figure 3, the accumulation technique involves breaking the rows of the matrix array 310 with the end column 320 into blocks. In the 64 bit example shown, the 32 rows of partial product blocks are broken into five blocks 1—5 of height 4, 4, 6, 8, and 10 bit rows. Each row is coupled to one pair of encoded B operand bits. In addition the matrix array 310 is composed of 64 columns of cells as shown by a bit slice 330. Each slice 330 is coupled to one bit of the A operand.

Each slice 330 of blocks 1—5 in the main array 310 is implemented as a cell 1, followed by a cell 2, followed by one or more of continue cells 3, and finished by a cell 4. Similarly, the end cell slice 320 of each

4

block 1—5 is implemented as a cell 5, followed by a cell 6, followed by one or more of cells 7, and finished by a cell 8. Each block 1—5 performs a local ripple accumulation of its partial product terms, labeled as LCa, and LCb, with a relative weight depending on the corresponding row position of the cell involved. For example, LCa5 is a local ripple term with a relative bit weight of 5.

The ripple accumulation of the blocks 1—5 is accomplished by the global ripple terms $G_a$ and $G_b$, and occurs in parallel. The length of the blocks 1—5 is selected to form an arithmetic progression, for example, 4-4-6-8-10 as illustrated in Figure 3, which matches the number of partial products required. An ideal progression would be of the form 1-2-3-4-5, but the sum of the lengths must match the number of partial products and the technique requires four rows in the first block as explained above. Thus, a progression of 4-6-6 would best match an accumulator with sixteen partial products and 4-4-6-8-10 effectively matches a system with 32 partial products. The result of arranging the length of blocks to form an arithmetic progression is that as block 1 finishes rippling, its terms are ready to be accumulated into the two global bits $G_a$ and $G_b$ along with the output terms of block 2. The output terms of block 2 then pass down the array 310 and end the slice 320 and are accumulated with the local bits $LC_a$ and $LC_b$ of block 3, and so on. The result is that after block 1, each additional block requires only two more full adder delays.

As each local bit $LC_a$ or $LC_b$ or global bit $G_a$ and $G_b$ is passed down the array 310 with 320 from one row to the next, it must be shifted two bits to the right in order to be assigned the proper bit weight. This is the reason for the additional full adders in the cells 5—8 in the end slice 320. The result is that the total number of intermediate product terms $P_a$ and $P_b$ is reduced to two terms per bit so that the intermediate product terms $P_a$ and $P_b$ may then pass on to a conventional carry propagate adder 40 (Figure 1), which adder 40 produces the final multiplier product bits D.

Since the first global bits $G_a$ and $G_b$ on the top row of the main array 310 are all zero, as shown in Figure 1, the cell 4 of block 1 may be modified as shown in Figure 4 to remove the logically redundant full adders in that cell to attain the minimum overall delay in the entire array 310.

## Claims

1. A binary multiplier of a first operand (A) and a second operand (B), each operand having N bits, including
an accumulating circuit and
a carry propagate adder,
said accumulating circuit being characterized in that
a) it includes a matrix array (310) and an end column (320), said matrix array being composed of N/2 partial product rows and N columns (slices 330) of cells, each row being coupled to one pair of B-operand bits, each column being coupled to one bit of the A-operand, the rows of said combination of said matrix array (310) and said end column (320) being divided into blocks (BLK1—BLK5), so that the number of rows included in each block forms an arithmetic progression following the progression of the block number (BLK1—BLK5) and matches the number of partial products required;
b) it only requires 8 different cell types (1—8), whereby the accumulation of the blocks occurs in ripple fashion, but the ripple accumulation of the blocks occurs in parallel;
c) each slice of each block in the matrix array (310) is implemented as one cell of first type (1), followed by one cell of second type (2), followed by one or more cells of third type (3), and finished by one cell of fourth type (4);
d) the slice of each block in the end column (320) is implemented by one cell of fifth type (5), followed by one cell of sixth type (6), followed by one or more cells of seventh type (7), and finished by one cell of eighth type (8);
e) the ripple accumulation of the blocks is accomplished by global ripple terms $G_a$ and $G_b$;
f) each block performs a local ripple accumulation of its partial product terms labelled as $LC_a$ and $LC_b$;
g) a first block is arranged as
a first row of first type cells (1) coupled to a digit of both said first and second operands (A, B) for producing first local ripple terms ($LC_a$), said first row being terminated by a cell of the fifth type (5) of said end column, said fifth type cell (5) being coupled to said B-operand for producing a first partial product signal ($P_{a0,1}$, $P_{B0,1}$),
a second row of second type cells (2) coupled to a digit of both said first and second operands (A, B) and to said first local ripple terms ($LG_a$) for producing second local ripple terms ($LG_b$), said second row being terminated by a sixth type cell (6) of said end column, said sixth type cell (6) being coupled to said B-operand for producing a second partial product signal ($P_{a2,3}$, $P_{b2,3}$),
at least one row of third type cells (3), each row of third type cells (3) being coupled to a digit of both said first and second operands (A, B), the first of said rows of third type cells (being coupled to said second local ripple term for producing a first set of third ripple terms ($LC_a$, $LC_b$), and subsequent ones of said rows of third type cell (3) being coupled to the local ripple terms of the next following row of third type cells (3) for producing subsequent sets of third local ripple terms, each of said rows of third type cells (3) being terminated by a seventh type cell (7) of said end column, said seventh type cell (7) being coupled to the B-operand for producing a third partial product signal ($P_{a4,5}$, $P_{a4,5}$), and
a fourth row of fourth type cells (4) coupled to a digit of both said first and second operands (A, B) and to the last set of third local ripple terms (LC$_a$, LC$_b$) for producing first global ripple terms (G$_a$, G$_b$), said fourth row of fourth type cells (4) being terminated by an eighth type cell (8) of said end column, said eight type cell (8) being coupled to the said B-operand for producing a fourth partial product signal (P$_{a6,7}$, P$_{b6,7}$); and a second block is arranged as

a fifth row of first type cells (1) coupled to a digit of both said first and second operands (A, B) and to the first global ripple terms (G$_a$, G$_B$) of the first block for producing fifth local ripple terms, said fifth row being terminated by a fifth type cell (5) of said end column, said fifth type cell (5) being coupled to said B-operand for producing a fifth partial product signal,

a sixth row of second type cells (2) coupled to a digit of both the first and the second operands (A, B) and to said fifth local ripple terms for producing sixth local ripple terms, said sixth row being terminated by a sixth type cell (6) of the end column, the sixth type cell (6) being coupled to said B-operand for producing a sixth partial product signal,

at least one seventh row of third type cells (3), each seventh row being coupled to a digit of both said first and second operands (A, B), the first of said seventh row being coupled to said sixth local ripple terms for producing a first set of seventh local ripple terms, and

subsequent ones of said seventh rows being coupled to the local ripple terms of the next following row of third type cells (3) for producing subsequent sets of third local ripple terms, each of said seventh rows being terminated by a seventh type cell (7) of the end column, the seventh type cell (7) being coupled to the B-operand for producing a seventh partial product signal, and

an eighth row of fourth type cells (4) coupled to a digit of both said first and second operands (A, B) and to the last set of seventh local ripple terms for producing second global ripple terms (G$_{a,B}$), said eighth row of fourth type cells (4) being terminated by an eighth type cell (8) of the end column, the eighth type cell (8) being coupled to the B-operand for producing an eighth partial product signal;

h) The partial product signals which are output from the respective cells of the end column (320) are passed to the carry propagate adder (40), which produces the final multiplier product bits (D).

2. The binary multiplier according to Claim 1, further comprising a third block which is arranged as

a ninth row of first type cells (1) coupled to a digit of both said first and second operands (A, B) and to the second global ripple terms of the second block for producing ninth local ripple terms, said ninth row being terminated by a fifth type cell (5) of said end column, said fifth type cell (5) being coupled to said B-operand for producing a ninth partial product signal,

a tenth row of second type cells (2) coupled to a digit of both said first and second operands (A, B) and to said ninth local ripple terms for producing tenth local ripple terms, said tenth row being terminated by a sixth type cell of said end column, said sixth type cell being coupled to said B-operand for producing a tenth partial product signal,

at least one row of third type cells (3), each row being coupled to a digit of both said first and second operands (A, B) the first of said rows of said third type cells (3) being coupled to said tenth local ripple terms for producing a first set of eleventh local ripple terms, and subsequent ones of said rows including the cells of the third type being coupled to the local ripple terms of the next following row of third type cells (3) for producing subsequent sets of third ripple terms, each of said at least one rows being terminated by a seventh type cell (7) of the end column, the seventh type cell (7) being coupled to the B-operand for producing an eleventh partial product signal, and

a twelfth row of fourth type cells (4) being coupled to a digit of both said first and second operands (A, B) and to the last set of eleventh local ripple terms for producing third global ripple terms, said twelfth row being terminated by an eighth type cell (8) of said end column, said eighth type cell being coupled to the B-operand for producing a twelfth partial product signal.

3. A binary multiplier as in Claim 1 or 2 wherein said second multiple-bit operand is encoded into a set of encoded second operand digits, said rows of cells are each coupled to a digit of said first operand and to one of the encoded second operand digits, and the respective end cell is coupled to said encoded second operand digits.

4. A binary multiplier as in any one of Claims 1 to 3 wherein the first and fifth type cells are identical.

**Patentansprüche**

1. Binärzahlen-Multiplizierer zur Multiplikation eines ersten Operanden (A) mit einem zweiten Operanden (B), von denen jeder N Bitstellen hat, mit
einer Akkumulatorschaltung und
einem Carry-Ausbreitungsaddierwerk, wobei die Akkumulatorschaltung dadurch gekennzeichnet ist, daß
a) sie ein Matrixfeld (310) und eine Endspalte (320) enthält, wobei das Matrixfeld aus N/2 Partialproduktreihen und N-Spalten (Scheiben 330) von Zellen besteht, von denen jede Reihe mit einem Bitpaar des B-Operanden und jede Spalte mit einem Bit des A-Operanden gekoppelt sind, die Reihen der Kombination des Matrixfeldes (310) mit der Endspalte (320) in Blöcke (BLK1—BLK5) eingeteilt sind, so daß die Anzahl der in jedem Block enthaltenen Reihen eine arithmetische Zahlenfolge bildet, die der Folge der Blocknummer (BLK1—BLK5) folgt und mit der Anzahl der benötigten Partialprodukte übereinstimmt;
b) sie nur 8 verschiedene Zellentypen (1—8) benötigt, wodurch die Akkumulation der Blöcke rippelartig

6

stattfindet, jedoch die Rippelakkumalation der Blöcke parallel geschieht;

c) jede Scheibe jedes Blocks in dem Matrixfeld (310) als eine Zelle eines ersten Typs (1), gefolgt von einer Zelle eines zweiten Typs (2), gefolgt von einer oder mehreren Zellen eines dritten Typs (3), die von einer Zelle eines vierten Typs (4) abgeschlossen werden, implementiert ist;

d) die Scheibe jedes Blocks in der Endspalte (320) durch eine Zelle eines fünften Typs (5), der eine Zelle eines sechsten Typs (6) folgt, der wiederum eine Zelle eines siebten Typs (7) folgt und die durch eine Zelle eines achten Typs (8) abgeschlossen wird, implementiert ist;

e) die rippelartige Akkumulation der Blöcke durch Gesamtrippelterme $G_a$ und $G_b$ ausgeführt wird;

f) jeder Block eine Lokalrippelakkumulation seiner mit $LC_a$ und $LC_b$ bezeichneten Partialproduktterme ausführt;

g) ein erster Block angeordnet ist als

eine erste Reihe aus Zellen (1) des ersten Typs, die mit einer Ziffer sowohl des ersten und des zweiten Operanden (A, B) zur Erzeugung erster Lokalrippelterme ($LC_a$) verbunden ist, wobei die erste Reihe von einer Zelle des fünften Typs (5) der Endspalte abgeschlossen ist und die Zelle des fünften Typs (5) mit dem B-Operanden zur Erzeugung eines ersten Partialproduktsignals ($P_{a0,1}$, $P_{b0,1}$) verbunden ist,

eine zweite Reihe aus Zellen (2) des zweiten Typs, die mit einer Ziffer des ersten und des zweiten Operanden (A, B) und mit den ersten Lokalrippeltermen ($LG_a$) zur Erzeugung zweiter Lokalrippelterme ($LG_b$) gekoppelt sind, wobei die zweite Reihe von einer Zelle (6) des sechsten Typs der Endspalte abgeschlossen ist und die Zelle (6) des sechsten Typs mit dem B-Operanden zur Erzeugung eines zweiten Partialproduktsignals ($P_{a2,3}$, $P_{b2,3}$) gekoppelt ist,

mindestens eine Reihe von Zellen (3) des dritten Typs, von denen jede Reihe mit einer Ziffer des ersten und des zweiten Operanden (A, B) verbunden ist und die erste dieser Reihen aus Zellen des dritten Typs mit dem zweiten Lokalrippelterm zur Erzeugung eines ersten Satzes aus dritter Lokalrippelterme ($LC_a$, $LC_b$) verbunden ist und die weiteren Reihen aus Zellen (3) des dritten Typs mit den Lokalrippeltermen der nachfolgenden Reihe aus Zellen (3) des dritten Typs zur Erzeugung nachfolgender Sätze dritter Lokalrippelterme verbunden sind, wobei jede der Reihen aus Zellen (3) des dritten Typs von einer Zelle (7) des siebten Typs der Endspalte abgeschlossen ist und die Zellen (7) des siebten Typs mit dem B-Operanden zur Erzeugung eines dritten Partialproduktsignals ($P_{a4,5}$, $P_{b4,5}$) gekoppelt ist, und

eine vierte Reihe aus Zellen (4) des vierten Typs, die mit einer Ziffer des ersten und des zweiten Operanden (A, B) und mit dem letzten Satz von dritten Lokalrippeltermen ($LC_a$, $LC_b$) zur Erzeugung erster Gesamtrippelterme ($G_a$, $G_b$) verbunden ist und die durch eine Zelle (8) vom achten Typ der Endspalte abgeschlossen ist, wobei die Zelle (8) des achten Typs mit dem B-Operanden zur Erzeugung eines vierten Partialproduktsignals ($P_{a6,7}$, $P_{b6,7}$) gekoppelt ist; und ein zweiter Block angeordnet ist als

eine fünfte Reihe aus Zellen (1) des ersten Typs, die mit einer Ziffer des ersten und des zweiten Operanden (A, B) und mit den ersten Gesamtrippeltermen ($G_a$, $G_b$) des ersten Blocks zur Erzeugung fünfter Lokalrippelterme verbunden ist und die durch eine Zelle (5) des fünften Typs der Endspalte abgeschlossen ist, wobei die Zelle (5) des fünften Typs mit dem B-Operanden zur Erzeugung eines fünften Partialproduktsignals gekoppelt ist,

eine sechste Reihe aus Zellen (2) des zweiten Typs, die mit einer Ziffer des ersten und des zweiten Operanden (A, B) und mit den fünften Lokalrippeltermen zur Erzeugung sechster Lokalrippelterme gekoppelt ist und die von einer Zelle (6) des sechsten Typs der Endspalte abgeschlossen ist, wobei die Zelle (6) des sechsten Typs mit dem B-Operanden zur Erzeugung eines sechsten Partialproduktsignals gekoppelt ist,

mindestens einer siebten Reihe aus Zellen (3) des dritten Typs, von denen jede siebte Reihe mit einer Ziffer des ersten und des zweiten Operanden (A, B) gekoppelt ist, wobei die erste der siebten Reihen mit den sechsten Lokalrippeltermen zur Erzeugung eines ersten Satzes von siebten Lokalrippeltermen verbunden ist, und darauffolgende siebte Reihen mit den Lokalrippeltermen der nächstfolgenden Reihe aus Zellen (3) des dritten Typs zur Erzeugung folgender Sätze dritter Lokalrippelterme verbunden sind, wobei jede siebte Reihe von einer Zelle (7) des siebten Typs der Endspalte abgeschlossen wird, die Zelle (7) des siebten Typs mit dem B-Operanden zur Erzeugung eines seibten Partialproduktsignals gekoppelt ist, und

eine achte Reihe aus Zellen (4) des vierten Typs die mit einer Ziffer des ersten und des zweiten Operanden (A, B) und mit dem letzten Satz aus siebten Lokalrippeltermen zur Erzeugung zweiter Gesamtrippelterme ($G_a$, $G_b$) verbunden ist, die durch eine Zelle (8) des achten Typs der Endspalte abgeschlossen ist, wobei die Zelle (8) des achten Typs mit dem B-Operanden zur Erzeugung eines achten Partialproduktsignals gekoppelt ist;

h) die Partialproductsignale, die von den jeweiligen Zellen der Endspalte (320) ausgegeben werden zu dem Carry-Ausbreitungsaddierwerk (40) übertragen werden, welches die Bits (D) des Endprodukts erzeugt.

2. Binärzahlen-Multiplizierer nach Anspruch 1, dadurch gekennzeichnet, daß er weiterhin einen dritten Block aufweist, der angeordnet ist als

eine neunte Reihe aus Zellen (1) des ersten Typs, die mit einer Ziffer des ersten und des zweiten Operanden (A, B) und mit den zweiten Gesamtrippeltermen des zweiten Blocks zur Erzeugung neunter Lokalrippelterme gekoppelt ist und die durch eine Zelle (5) des fünften Typs der Endspalte abgeschlossen ist, wobei die Zelle (5) des fünften Typs mit dem B-Operanden zur Erzeugung eines neunten Partialproduktsignals verbunden ist,

eine zehnte Reihe aus Zellen (2) des zweiten Typs, die mit einer Ziffer des ersten und des zweiten Operanden (A, B) und mit den neunten Lokalrippeltermen zur Erzeugung zehnter Lokalrippelterme verbunden ist und die durch eine Zelle des sechsten Typs der Endspalte abgeschlossen ist, wobei die Zelle des sechsten Typs mit dem B-Operanden zur Erzeugung eines zehnten Partialproduktsignals gekoppelt ist,

mindestens eine Reihe aus Zellen (3) des dritten Typs, von denen jede Reihe mit einer Ziffer des ersten und des zweiten Operanden (A, B) gekoppelt ist und die erste dieser Reihen aus Zellen (3) des dritten Typs mit den zehnten Lokalrippeltermen zur Erzeugung eines ersten Satzes aus elften Lokalrippeltermen gekoppelt ist und nachfolgende Reihen, die die Zellen von dritten Typ enthalten, mit den Lokalrippeltermen der nächstfolgenden Reihe aus Zellen (3) des dritten Typs zur Erzeugung folgender Sätze dritter Rippelterme gekoppelt ist, wobei jede dieser Reihen aus Zellen (3) des dritten Typs von einer Zelle (7) des siebten Typs der Endspalte abgeschlossen ist und die Zelle (7) des siebten Typs mit dem B-Operanden zur Erzeugung eines elften Partialprodoktsignals gekoppelt ist, und

eine zwölfte Reihe aus Zellen (4) des vierten Typs, die mit einer Ziffer des ersten und des zweiten Operanden (A, B) und mit dem letzten Satz aus elften Lokalrippeltermen zur Erzeugung dritter Gesamtrippelterme gekoppelt ist und die durch eine Zelle des achten Typs (8) der Endspalte abgeschlossen ist, wobei die Zelle des achten Typs mit dem B-Operanden zur Erzeugung eines zwölften Partialproduktsignals verbunden ist.

3. Binärzahlen-Multiplizierer nach Anspruch 1 oder 2, dadurch gekennzeichnet, daß der zweite Mehrbitoperand in Form eines Satzes aus codierten zweiten Operandenziffern codiert ist, die Reihen aus Zellen jeweils mit einer Ziffer des ersten Operanden und mit einer der codierten zweiten Operandenziffern gekoppelt sind und die jeweilige Endzelle mit den codierten zweiten Operandenziffern verbunden ist.

4. Binärzahlen-Multiplizierer nach einem der Ansprüche 1 bis 3, dadurch gekennzeichnet, daß die Zellen des ersten und des fünften Typs identisch sind.

## Revendications

1. Un multiplicateur binaire d'un premier opérande (A) et d'un deuxième opérande (B), chaque opérande possédant N bits, comprenant

un circuit accumulateur et

un additionneur à propagation de report,

ledit circuit accumulateur étant caractérisé en ce que

a) il comprend un réseau formant matrice (310) et une colonne finale (320)

ledit réseau formant matrice étant composé de N/2 rangées partielles de produits en N colonnes (tranches 330) de cellules, chaque rangée étant couplée à une paire de bits d'opérande B,

chaque colonne étant couplée à un bit de l'opérande A, les rangées de ladite combinaison dudit réseau formant matrice (310) et de ladite colonne finale (320) étant divisées en blocs (BLK1 à BLK5), d'une manière telle que le nombre de rangées comprises dans chaque bloc forme une progression arithmétique suivant la progression du numéro de bloc (BLK1 à BLK5) et correspond au nombre de produits partiels nécessaires;

b) il n'exige que 8 types de cellules différents (1 à 8), grâce à quoi l'accumulation des blocs se produit de manière ondulée, mais l'accumulation d'ondulation des blocs se produit en parallèle;

c) chaque tranche de chaque bloc du réseau formant matrice (310) est implantée sous la forme d'une cellule du premier type (1), suivie d'une cellule du deuxième type (2), suivie d'une ou plusieurs cellules du troisième type (3), et terminée par une cellule du quatrième type (4);

d) la tranche de chaque bloc de la colonne finale (320) est implantée sous la forme d'une cellule du cinquième type (5), suivie d'une cellule du sixième type (6), suivie d'une ou plusieurs cellules du septième type (7), et terminée par une cellule du huitième type (8);

e) l'accumulation d'ondulation des blocs est accomplie par des termes locaux d'ondulation $G_a$ et $G_b$;

f) chaque bloc effectue une accumulation locale d'ondulation de ses termes de produits partiels désignés par $LC_a$ et $LC_b$;

g) une premier bloc est disposé sous la forme de

une première rangée de cellules du premier type (1) couplée à un chiffre à la fois desdits premier et deuxième opérandes (A, B) pour produire des premiers termes locaux d'ondulation ($LC_a$), ladite première rangée étant terminée par une cellule du cinquième type (5) de ladite colonne finale, ladite cellule du cinquième type (5) étant couplée audit opérande B pour produire un premier signal de produit partiel ($P_{a0,1}$, $P_{b0,1}$),

une deuxième rangée de cellules du deuxième type (2) couplée à un chiffre à la fois desdits premier et deuxième opérandes (A, B) et auxdits premiers termes locaux d'ondulation (LCa) pour produire des deuxièmes termes locaux d'ondulation ($LC_b$), ladite deuxième rangée étant terminée par une cellule du sixième type (6) de ladite colonne finale, ladite cellule du sixième type (6) étant couplée audit opérande (B) pour produire un deuxième signal de produit partiel ($P_{a2,3}$, $P_{b2,3}$),

au moins une rangée de cellules du troisième type (3), chaque rangée de cellules du troisième type (3) étant couplée à un chiffre à la fois des premier et deuxième opérandes (A, B), la première desdites rangées de cellules du troisième type étant couplée auxdits deuxièmes termes locaux d'ondulation pour produire un premier jeu de troisièmes termes locaux d'ondulation ($LC_a$, $LC_b$), et des rangées suivantes parmi les rangées de cellules du troisième type (3) étant couplées aux termes locaux d'ondulation de la rangée immédiatement suivante de cellules du troisième type (3) pour produire des jeux ultérieurs de troisièmes termes locaux d'ondulation, chacune desdites rangées de cellules du troisième type (3) étant terminée par une cellule du septième type (7) de ladite colonne finale, ladite cellule du septième type (7) étant couplée à l'opérande B pour produire un troisième signal de produit partiel ($P_{a4,5}$, $P_{b4,5}$), et

une quatrième rangée de cellules du quatrième type (4) couplées à un chiffre à la fois desdits premier et deuxième opérandes (A, B) et au dernier jeu de troisièmes termes locaux d'ondulation ($LC_a$, $LC_b$) pour produire des premiers termes globaux d'ondulation ($G_a$, $G_b$), ladite quatrième rangée de cellules du quatrième type (4) étant terminée par une cellule du huitième type (8) de ladite colonne finale, ladite cellule du huitième type (8) étant couplée audit opérande B pour produire un quatrième signal de produit partiel ($P_{a6,7}$, $P_{b6,7}$); et

un deuxième bloc est disposé sous la forme de

une cinquièxe rangée de cellules du premier type (1) couplées à un chiffre à la fois desdits premier et deuxième opérandes (A, B) et auxdits premiers termes globaux d'ondulation ($G_a$, $G_b$) du premier bloc pour produire des cinquièmes termes locaux d'ondulation, ladite cinquième rangée étant terminée par une cellule du cinquième type (5) de ladite colonne finale, ladite cellule du cinquième type (5) étant couplée audit opérande B pour produire un cinquième signal de produit partiel,

une sixième rangée de cellules du deuxième type (2) couplée à un chiffre à la fois desdits premier et deuxième opérandes (A, B) et auxdits cinquièmes termes locaux d'ondulation pour produire des sixièmes termes locaux d'ondulation, ladite sixième rangée étant terminée par une cellule du sixième type (6) de la colonne finale, la cellule du sixième type (6) étant couplée audit opérande (B) pour produire un sixième signal de produit partiel,

au moins une septième rangée de cellules du troisième type (3), chaque septième rangée étant couplée à un chiffre à la fois des premier et deuxième opérandes (A, B), la première desdites septièmes rangées étant couplée auxdits sixièmes termes locaux d'ondulation pour produire un premier jeu de septièmes termes locaux d'ondulation, et

les suivantes parmi lesdites septièmes rangées étant couplées aux termes locaux d'ondulation de la rangée immédiatement suivante de cellules du troisième type (3) pour produire des jeux ultérieurs de troisièmes termes locaux d'ondulation, chacune desdites septièmes rangées étant terminée par une cellule du septième type (7) de la colonne finale, la cellule du septième type (7) étant couplée à l'opérande B pour produire un septième signal de produit partiel, et

une huitième rangée de cellules du quatrième type (4) couplées à un chiffre à la fois desdits premier et deuxième opérandes (A, B) et au dernier jeu de septièmes termes locaux d'ondulation pour produire des deuxièmes termes globaux d'ondulation ($G_{a,b}$), ladite huitième rangée de cellules du quatrième type (4) étant terminée par une cellule du huitième type (8) de la colonne finale, la cellule du huitième type (8) étant couplée audit opérande B pour produire un huitième signal de produit partiel;

h) les signaux de produits partiels qui sont émis par les cellules respectives de la colonne finale (320) sont envoyés à l'additionneur de propagation de report (40), qui produit les bits finals de produit du multiplicateur (D).

2. Le multiplicateur binaire selon la revendication 1, comprenant de plus un troisième bloc qui est disposé sous la forme de

une neuvième rangée de cellules du premier type (1) couplées à un chiffre à la fois desdits premier et deuxième opérandes (A, B) et aux deuxièmes termes globaux d'ondulation du deuxième bloc pour produire des neuvièmes termes locaux d'ondulation, ladite neuvième rangée étant terminée par une cellule du cinquième type (5) de ladite colonne finale, ladite cellule du cinquième type (5) étant couplée audit opérande B pour produire un neuvième signal de produit partiel,

une deuxième rangée de cellules du deuxième type (2) couplée à un chiffre à la fois desdits premier et deuxième opérandes (A, B) et auxdits neuvièmes termes locaux d'ondulation pour produire des dixièmes termes locaux d'ondulation, ladite dixième rangée étant terminée par une cellule du sixième type de ladite colonne finale, ladite cellule du sixième type étant couplée audit opérande B pour produire un dixième signal de produit partiel,

au moins une rangée de cellules du troisième type (3), chaque rangée étant couplée à un chiffre à la fois des premier et deuxième opérandes (A, B), la première desdites rangées desdites cellules du troisième type (3) étant couplée auxdits dixièmes termes locaux d'ondulation pour produire un premier jeu de onzièmes termes locaux d'ondulation, et des suivantes parmi lesdites rangées comprenant les cellules du troisième type étant couplées aux termes locaux d'ondulation de la rangée immédiatement suivante de cellules du troisième type (3) pour produire des jeux ultérieurs de troisièmes termes d'ondulation, chacune desdites rangées, au moins unique, étant terminée par une cellule du septième type (7) de la colonne finale, la cellule du septième type (7) étant couplée à l'opérande B pour produire un onzième signal de produit partiel, et

une douzième rangée de cellules du quatrième type (4) étant couplées à un chiffre à la fois desdits premier et deuxième opérandes (A, B) et au dernier jeu de onzièmes termes locaux d'ondulation pour produire des troisièmes termes globaux d'ondulation, ladite douzième rangée étant terminée par une cellule du huitième type (8) de ladite colonne finale, ladite cellule du huitième type étant couplée à l'opérande B pour produire un douzième signal de produit partiel.

3. Un multiplicateur binaire selon l'une des revendications 1 ou 2, dans lequel le ledit deuxième opérande à bits multiples est encodé dans un jeu de chiffres encodés de deuxième opérande, lesdites rangées de cellules sont couplées chacune à un chiffre dudit premier opérande et à l'un des chiffres encodés de deuxième opérande, et la cellule finale respective est couplée auxdits chiffres encodés de deuxième opérande.

4. Un multiplicateur binaire selon l'une quelconque des revendications 1 à 3, dans lequel les cellules de premier et du cinquième type sont identiques.

FIGURE IA
(PRIOR ART)

FIGURE IB
(PRIOR ART)

FIGURE IC
(PRIOR ART)

FIGURE I'

FIGURE IA (PRIOR ART)

FIGURE 1B (PRIOR ART)

FIGURE IC
(PRIOR ART)

EP 0 109 137 B1

CELL 1
FIGURE 2A

CELL 3
FIGURE 2C

CELL 2
FIGURE 2B

CELL 4
FIGURE 2D

5

FIGURE 2E

CELL 5

FIGURE 2F

CELL 6

FIGURE 2G

CELL 7

FIGURE 2H

CELL 8

ALTERNATE CELL 4

FIGURE 4

FIGURE 3